# EUROPEAN PATENT SPECIFICATION

(11) **EP 3 064 399 B1**
(45) Date of publication and mention of the grant of the patent: **31.01.2018**
(21) Application number: 15157807.7
(22) Date of filing: 05.03.2015
(51) Int. Cl.: B60P 7/08

(54) **Pivotal and detachable tightening strap arrangement**
Schwenkbare und abnehmbare Spannbandanordnung
Dispositif à sangle de serrage pivotant et détachable

(43) Date of publication of application: 07.09.2016
(73) Proprietor: Brenderup AB, 553 13 Jönköping (SE)
(72) Inventor: Stork, Joakim, 553 31 JÖNKÖPING (SE)
(74) Representative: Awapatent AB

(56) References cited:
- EP-A1- 0 008 240
- EP-A2- 1 591 311
- DE-A1- 3 924 534
- DE-U1-202010 006 966
- US-B1- 6 626 621

## Description

### Technical Field

The present disclosure relates to a strap tightening arrangement for arrangement on a trailer beam, such as disclosed in DE202010006966U.

### Background

Trailers such as boat trailers need arrangements for fixing the cargo to the trailer. Separate straps or straps may be used and fastened around beams of the trailer.

There are arrangements available that provides a strap tightening arrangement fixedly arranged to a trailer beam. The strap tightening arrangement may be fixed by screws through the trailer beam. This has the advantage that straps always are available when cargo is to be fixed and that an end of the strap is rigidly fixed to the trailer.

However, such strap tightening arrangement is rather limited to the position wherein the arrangement is fixed to the trailer beam.

Consequently, there is a need for a strap tightening arrangement which provides the advantages of a fixedly arranged strap, but at the same time is as flexible as a separated strap when fixating cargo on the trailer.

### Summary

It is an object of the present invention to provide an improved solution that alleviates the mentioned drawbacks with present devices. Furthermore, it is an object to provide a strap tightening arrangement that enables a secure and flexible fixation of cargo on a trailer.

This is provided by a strap tightening arrangement for arrangement on a trailer beam. The strap tightening arrangement comprises a beam bracket for arrangement on a trailer beam and a strap tightening device arranged on said beam bracket. The strap tightening device is pivotally arranged on the beam bracket. The beam bracket comprises an openable latch for removable fixation of the beam bracket to a trailer beam.

The present invention provides an arrangement having high flexibility when it comes to arrangement on the trailer beam. The combination of a strap tightening device being pivotal relative to the beam bracket and the beam bracket having an openable latch for removable fixation to a trailer beam provides a strap tightening arrangement with high flexibility of both beam position and strap direction. The strap tightening arrangement may not be suitable to place anywhere at the trailer beams. Further, to provide the most optimal fixation of the trailer cargo, a certain direction or angle of the strap from its fixation point to the trailer beam may be required. The removable fixation to the trailer beam may enable the beam bracket to be placed at a suitable location on the trailer beam, and the pivotal strap tightening device may enable a suitable strap direction. In the same way, but the opposite, the pivotal strap tightening device may enable a suitable strap direction from different locations on the trailer beam, and the removable fixation of the beam bracket may enable it to easily be moved to a suitable location on the trailer beam.

The pivoting arrangement may facilitate a suitable strap direction in any direction relative to the trailer beam. The pivotal movement may be achieved via a suspension allow rotation, such as a screw or bolt or he like. The suspension may allow for movement in several degrees of freedom, such as a ball joint or the like, in order to provide flexibility to the strap tightening device.

By fixing the beam bracket to a trailer beam by means of an openable latch, instead of a fixation by means of a screw or bolt through the beam, no damage of the trailer beam may be needed in form of holes through the trailer beam.

In one embodiment, the beam bracket may be arranged to, when arranged on the beam, form a tight fit against the beam to ensure immobility of the beam bracket relative to the trailer beam.

The beam bracket may when arranged on to the trailer beam, preferably be tightly arranged upon the trailer beam in order for the beam bracket to provide a secure strapping arrangement. An unsecure strapping arrangement may involve that the load being strapped onto the trailer may rattle or even dismount, potentially causing damage. A tight fit may be provided by allowing the inner circumference of the beam bracket to be close to the outer circumference of the beam bracket, clamping against the trailer beam in order to prevent slack. A secure fit may alternatively be achieved by fixating the beam bracket onto the trailer beam by a securing element, such as a pin or a rivet.

In one embodiment, the beam bracket may form a cross section suitable to fit around said beam.

In order to ensure a fit that is well suited the current installation, it may be an advantage to allow the cross section of the beam bracket to match the cross section of the trailer beam. By matching cross section it is meant that the portions of the beam bracket that may be in contact with the trailer beam, are suited to have a corresponding shape as the beam bracket. It is thus the overall cross section of the beam bracket that may be substantially the same as the cross section of the trailer beam. There may be parts of the beam bracket that may not be designed to be in contact with the trailer beam, and may subsequently not be of a corresponding shape, although the cross section may be substantially the same.

In one embodiment, the cross section may have a shape substantially like any of the following: round, semi circle, rectangular, quadrangle, U-shaped, triangle or irregular.

The cross section of the beam bracket may be of any shape that may suit the trailer beam. For instance, if the trailer beam is round, a suitable corresponding shape of the beam bracket may be round. The beam bracket may thus be designed to suit any trailer beam regardless of its shape. The cross section may preferably be of a substantially rectangular shape. Since trailer arrangement often comprises rectangular trailer beams, it may be advantageous to provide a beam bracket substantially rectangular in shape.

In one embodiment, the strap device may be arranged at a first side of the beam bracket and the latch forms an openable second side of the beam bracket opposite of said first side.

The strap tightening device may preferably be located at an upper side of a trailer beam when the arrangement is arranged thereon, providing the latch being positioned at the opposite under side of the trailer beam. The latch under the trailer beam may provide a protected location that still enables easy access for moving the beam bracket.

In a further embodiment, the first and second sides of the beam bracket may be connected via opposite third and fourth sides, and the cross-section shape of the beam bracket may comprise, at the intersection between the first side and the respective third and fourth side, a respective shoulder for providing a contact surface towards a beam when the beam bracket is arranged on a trailer beam.

The shoulders may provide a secure fixation of the beam bracket when the arrangement is fixed to the trailer beam. The strap tightening device may be pivotally arranged to the beam bracket by means of a screw or bolt around which screw or bolt's central axis the strap tightening device is pivotal. The pivotal movement may also be achieved via a suspension that may allow movement in several degrees of freedom, such as a ball joint or the like. The shoulders may further provide contact surface towards the trailer beam such that a space is formed above the trailer beam when the arrangement is arranged thereto, in which space a nut for the screw, bolt or ball joint may be arranged. The space may thereby provide that the nut do not interfere with the arrangement to the trailer beam.

In a further embodiment, the first and second sides of the beam bracket may be connected via opposite third and fourth sides, and the latch may be configured to be connected to said third side and to interact with a hook formed end portion of the fourth side when locked to fix the strap tightening arrangement to a trailer beam.

The latch may grasp to a hook formed at an end of the fourth side. When the latch is locked it may provide a connection between the third and fourth sides, forming a closed second side of the beam bracket.

In another embodiment, the latch may be a toggle latch.

A toggle latch or toggle fastener may provide a secure fixation of the beam bracket to the trailer beam. The toggle latch may compress the beam bracket surrounding the trailer beam such that a clamping of the bracket is provided towards the trailer beam. The toggle latch may thereby provide a removable fixation of the beam bracket that is secure and reliable when it is fixed to the trailer beam. However, the latch may be locked by any other arrangement, such as a clamp, pin, screw or any other solution that may achieve the desired locking effect against the trailer beam.

### Brief Description of the Drawings

The invention will in the following be described in more detail with reference to the enclosed drawings, wherein:
Fig. 1 is side view of a strap tightening arrangement according to an embodiment of the invention, arranged on a trailer beam; and
Fig. 2 is side view of a strap tightening arrangement according to another embodiment of the invention, arranged on a trailer beam.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

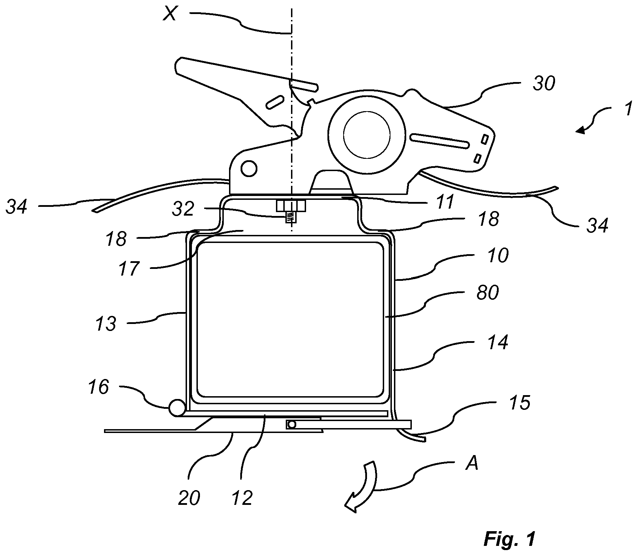

Fig. 1 illustrates a strap tightening arrangement 1 according to an embodiment of the invention. The strap tightening arrangement 1 comprises a beam bracket 10 and a strap tightening device 30. The beam bracket 10 is arranged on a trailer beam 80. The beam bracket 10 has a cross-section providing a first side 11, an opposite second side 12, a third side 13 connecting the first and second sides, and a fourth side 14 also connecting the first and second sides and being opposite to the third side 13. The beam bracket in fig.1 exemplifies a rectangular cross-section, but any suitable cross-section shape may be possible to fit over a trailer beam with a corresponding shape.

The strap tightening device 30 is arranged to the beam bracket 10 at the first side 11. The strap tightening device 30 is fastened to the beam bracket 10 using a bolt 32. The strap tightening device 30 is pivotal relative to the beam bracket 10 around an axis X, being the rotational axis of the bolt 32. The strap tightening device 30 is thereby freely rotatable around the axis X.

Between the first side 11 of the beam bracket 10 and the third side 13 is a shoulder 18 formed. The shoulder 18 provides a contact surface towards the trailer beam 80. A space 17 is also formed between the first side 11 and the trailer beam 80. In the space 17 is the bolt 32 received together with a nut for attachment of the strap tightening device 30 to the beam bracket 10.

The second side 12 of the beam bracket 10 is formed by a cover suspended by a hinge 16. The cover is openable in direction A, rotating around the rotational axis of the hinge 16. On the cover is a latch 20 provided. The latch 20 is a toggle latch or toggle fastener. The latch 20 is lockable around a hook 15 formed as an extension of the third side 13 of the beam bracket 10.

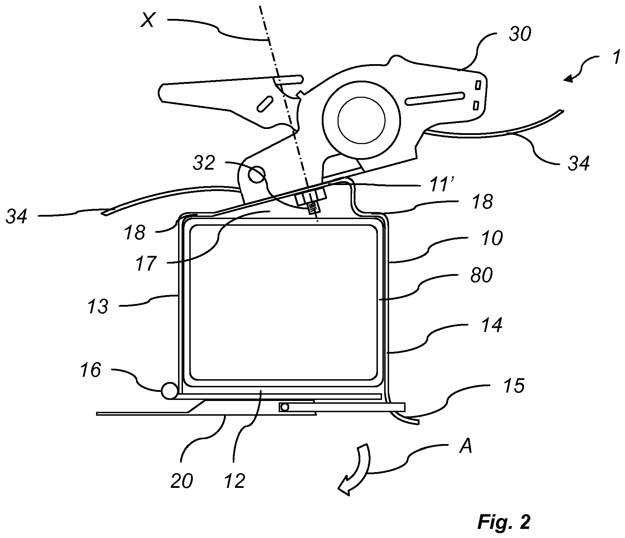

Fig. 2 illustrates an alternative embodiment of the strap tightening arrangement 1 wherein the first side 11 of the beam bracket 10 is inclined relative to the second side 12. The strap tightening device 30 is thereby arranged in an inclined manner relative to an upper side of the trailer beam 80 when the strap tightening arrangement 1 is arranged to the trailer beam 80. Such arrangement may provide an improved directivity of the strap 34 when fixing cargo to the trailer, further also due to the strap tightening device 30 being pivotally arranged to the beam bracket 10.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A strap tightening arrangement (1) for arrangement on a trailer beam (80), the strap tightening arrangement comprising
a beam bracket (10) for arrangement on a trailer beam (80),
a strap tightening device (30) arranged on said beam bracket,
**characterized in that**
the strap tightening device (30) is pivotally arranged on the beam bracket (10),
wherein the beam bracket further comprises an openable latch (20) for removable fixation of the beam bracket to said trailer beam (80).

2. Strap tightening arrangement according to claim 1, wherein the beam bracket (10) is arranged to, when arranged on to said trailer beam (80), to form a tight fit against said beam (80) to provide immobility of said beam bracket (10) relative to said trailer beam.

3. Strap tightening arrangement (1) according to claim 1 or 2, wherein the beam bracket (10) forms a cross section suitable to fit around said trailer beam (80).

4. Strap tightening arrangement (1) according to claim 3, wherein said cross section has a shape substantially like any of the following: round, semi circle, rectangular, quadrangle, U-shaped, triangle or irregular.

5. Strap tightening arrangement (1) according to any of the claims 3-4, wherein the strap tightening device (30) is arranged at a first side (11) of said beam bracket (10) and the latch (20) forms an openable second side (12) of the beam bracket (10) opposite of said first side.

6. Strap tightening arrangement (1) according to claim 5, wherein the first (11) and second (12) sides of the beam bracket (10) are connected via opposite third (13) and fourth (14) sides, and wherein the cross-section shape of the beam bracket (10) comprises, at the intersection between the first side and the respective third and fourth side, a respective shoulder (18) for providing a contact surface towards a beam when the beam bracket is arranged on a trailer beam (80).

7. Strap tightening arrangement (1) according to claim 5 or 6, wherein the first (11) and second (12) sides of the beam bracket are connected via opposite third (13) and fourth (14) sides, and wherein the latch (20) is configured to be connected to said third side and to interact with a hook formed end portion (15) of the fourth side when locked to fix the strap tightening arrangement to a trailer beam (80).

8. Strap tightening arrangement (1) according to any of the preceding claims, wherein the latch (20) is a toggle latch.

## Patentansprüche

1. Spannbandanordnung (1) zum Anordnen auf einem Anhängerträger (80), wobei die Spannbandanordnung aufweist:
eine Trägerklammer (10) zum Anordnen auf einem Anhängerträger (80),
eine Bandspannvorrichtung (30), die auf der Trägerklammer angeordnet ist,
**dadurch gekennzeichnet, dass**
die Bandspannvorrichtung (30) auf der Trägerklammer (10) schwenkbar angeordnet ist,
wobei die Trägerklammer ferner einen öffenbaren Verschluss (20) für eine abnehmbare Befestigung der Trägerklammer an dem Anhängerträger (80) aufweist.

2. Spannbandanordnung nach Anspruch 1, wobei die Trägerklammer (10) dafür ausgelegt ist, wenn sie an dem Anhängerträger (80) angebracht wird, einen festen Sitz gegen den Träger (80) zu bilden, um eine Bewegungsunfähigkeit der Trägerklammer (10) relativ zu dem Anhängerträger vorzusehen.

3. Spannbandanordnung (1) nach Anspruch 1 oder 2, wobei die Trägerklammer (10) einen Querschnitt bildet, der geeignet ist, um um den Anhängerträger (80) zu passen.

4. Spannbandanordnung (1) nach Anspruch 3, wobei der Querschnitt im Wesentlichen eine beliebige von folgenden Formen aufweist:
rund, halbkreisförmig, rechtwinklig, quadratisch, U-förmig, dreieckig oder irregulär.

5. Spannbandanordnung (1) nach einem beliebigen der Ansprüche 3-4, wobei die Bandspannvorrichtung (30) an einer ersten Seite (11) der Trägerklammer (10) angeordnet wird, und der Verschluss (20) eine der ersten Seite gegenüberliegende öffenbare zweite Seite (12) der Trägerklammer (10) bildet.

6. Spannbandanordnung (1) nach Anspruch 5, wobei die erste (11) und zweite (12) Seite der Trägerklammer (10) durch eine gegenüberliegende dritte (13) und vierte (14) Seite verbunden sind, und wobei die Querschnittsform der Trägerklammer (10) an dem Schnittpunkt zwischen der ersten Seite und der entsprechenden dritten und vierten Seite, eine entsprechende Schulter (18) aufweist, um eine Kontaktfläche gegen einen Träger vorzusehen, wenn die Trägerklammer auf einem Anhängerträger (80) angeordnet wird.

7. Spannbandanordnung (1) nach Anspruch 5 oder 6, wobei die erste (11) und zweite (12) Seite der Trägerklammer durch gegenüberliegende eine dritte (13) und vierte (14) Seite verbunden sind, und wobei der Verschluss (20) dazu eingerichtet ist, mit der dritten Seite verbunden zu werden und mit einem hakenförmigen Endabschnitt (15) der vierten Seite zusammenzuwirken, wenn er geschlossen wird, um die Spannbandanordnung an einem Anhängerträger (80) zu befestigen.

8. Spannbandanordnung (1) nach einem beliebigen der vorhergehenden Ansprüche, wobei der Verschluss (20) ein Kniehebelverschluss ist.

## Revendications

1. Agencement de serrage de sangle (1) destiné à être agencé sur une poutre de remorque (80), l'agencement de serrage de sangle comprenant
une fixation de poutre (10) destinée à être agencé sur une poutre de remorque (80),
un dispositif de serrage de sangle (30) agencé sur ladite fixation de poutre,
**caractérisé en ce que**
le dispositif de serrage de sangle (30) est agencé en pivotement sur la fixation de poutre (10),
dans lequel la fixation de poutre comprend en outre un verrou ouvrable (20) pour la fixation détachable de la fixation de poutre à ladite poutre de remorque (80).

2. Agencement de serrage de sangle selon la revendication 1, dans lequel la fixation de poutre (10) est agencée pour, lorsqu'elle est agencée sur ladite poutre de remorque (80), former un ajustement serré contre ladite poutre (80) pour fournir l'immobilité de ladite fixation de poutre (10) par rapport à ladite poutre de remorque.

3. Agencement de serrage de sangle (1) selon la revendication 1 ou 2, dans lequel la fixation de poutre (10) forme une section transversale appropriée pour s'ajuster autour de ladite poutre de remorque (80).

4. Agencement de serrage de sangle (1) selon la revendication 3, dans lequel ladite section transversale a une forme essentiellement selon l'une quelconque des suivantes : ronde, semi-circulaire, rectangulaire, quadrilatère, en forme de U, triangulaire ou irrégulière.

5. Agencement de serrage de sangle selon l'une quelconque des revendications 3-4, dans lequel le dispositif de serrage de sangle (30) est agencé sur un premier côté (11) de ladite fixation de poutre (10) et le verrou (20) forme un deuxième côté (12) ouvrable de la fixation de poutre (10) opposé audit premier côté.

6. Agencement de serrage de sangle (1) selon la revendication 5, dans lequel les premier (11) et deuxième (12) côtés de la fixation de poutre (10) sont connectés par le biais de troisième (13) et quatrième (14) côtés opposés, et dans lequel la forme de section transversale de la fixation de poutre (10) comprend, à l'intersection entre le premier côté et le troisième et quatrième côté respectif, un épaulement respectif (18) pour fournir une surface de contact en direction d'une poutre lorsque la fixation de poutre est agencée sur une poutre de remorque (80).

7. Agencement de serrage de sangle (1) selon la revendication 5 ou 6, dans lequel les premier (11) et deuxième (12) côtés de la fixation de poutre sont connectés par le biais de troisième (13) et quatrième (14) côtés opposés, et dans lequel le verrou (20) est configuré pour être connecté audit troisième côté et pour interagir avec une partie d'extrémité en forme de crochet (15) du quatrième côté lorsque verrouillé pour fixer l'agencement de serrage de sangle à une poutre de remorque (80).

8. Agencement de serrage de sangle (1) selon l'une quelconque des revendications précédentes, dans lequel le verrou (20) est un verrou à bascule.
